# EUROPEAN PATENT APPLICATION

(11) **EP 3 163 272 A1**
(43) Date of publication of application: **03.05.2017**
(21) Application number: 15191493.4
(22) Date of filing: 26.10.2015
(51) Int. Cl.: G01L 1/20, G06F 3/047, A61B 5/00, H01B 7/10, A63B 71/06

(54) **PRESSURE SENSITIVE LAYER APPLICABLE TO ANY SURFACE**

(71) Applicant: Hofmann, Martin, 1005 Lausanne (CH)
(72) Inventor: Hofmann, Martin, 1005 Lausanne (CH)
(74) Representative: Ganguillet, Cyril

(57) **Abstract**

The present invention relates to a pressure sensitive layer (10) applicable to any surface comprising:
- a mat (11) defined by a top face (11 a) and a bottom face (11 b), said mat (11) being made in an elastic material such that its thickness can be reduced temporally and locally when a pressure is exerted on its top face (11 a),
- a first array of electrically conductive threads (12a) at least partially embedded in the mat (11),
- a second array of electrically conductive threads (12b) at least partially embedded in the mat (11),

wherein the threads (12a, 12b) of the first and second arrays define a grid (13) in which each thread (12a) of the first array is in contact with at least one thread (12b) of the second array and each thread (12b) of the second array is in contact with at least one thread (12a) of the first array, and
wherein each thread (12a, 12b) of the first and second arrays comprises an electrically conductive core (15) that is clad with an outer piezoresistive layer (16).

## Description

### FIELD OF THE INVENTION

The present invention relates to a pressure sensitive layer applicable to any surface, such as sport courts.

### BACKGROUND OF THE INVENTION

Many sports nowadays face the introduction of technological innovations for providing key information to the players or the referees.

In particular, a number of devices have been implemented in tennis to automatically detect if a tennis ball has landed in or out of bounds. Other devices aim to propose training systems for tennis players trying to improve their performance. However, current training systems provide only limited feedback to the players. For example, the training teaching device disclosed in the patent application US 2013/0267355 A1 is configured to detect contact between the tennis ball and target mats placed in specific areas of the tennis court, said areas being commonly targeted during regular tennis competition. Therefore, this known device does not provide information relative to ball impacts occurring in the entire court. Furthermore, this device is not configured to distinguish between impacts made by a tennis ball and other impacts made by the player's feet or a tennis racquet. Other systems in the prior art try to avoid this drawback by using pressure sensitive material. Thus, US 4,855,711 discloses an impact detection device comprising two conductive layers separated by a continuous resilient insulating layer. When compressed, the layered device generates an electrical impulse that is proportional to the intensity of the compression. Therefore, this device can distinguish different types of impacts occurring at the surface of a tennis court. However, due to the use of continuous layers, this device does not allow for an efficient use of materials, causing very high costs of manufacture if the entire court is equipped with such a device. Furthermore, the use of layers does not permit the accurate measurement of forces exerted at discrete points on the surface of the court. Indeed, when a ball or a foot impacts the surface of the court, the compressed areas of the layers curve, thus indirectly generating a curvature of adjacent areas thereof. Therefore, these non-impacted areas may be wrongly considered as impacted areas by the device. Finally, this device uses a connecting wiring to put the conductive layers in electrical contact with a controller. This connecting wiring may generally form non-sensing areas on the court, which is not acceptable if such a device must be used during professional tournaments.

The aim of the present invention is therefore to provide a pressure sensitive layer, wherein the above mentioned drawbacks are avoided.

### SUMMARY OF THE INVENTION

The present invention relates to a pressure sensitive layer applicable to any surface comprising:
- a mat defined by a top face and a bottom face, said mat being made in an elastic material such that its thickness can be reduced temporally and locally when a pressure is exerted on its top face,
- a first array of electrically conductive threads at least partially embedded in the mat,
- a second array of electrically conductive threads at least partially embedded in the mat,
wherein the threads of the first and second arrays define a grid in which each thread of the first array is in contact with at least one thread of the second array and each thread of the second array is in contact with at least one thread of the first array, and
wherein each thread of the first and second arrays comprises an electrically conductive core that is clad with an outer piezoresistive layer.

Important features of the pressure sensitive layer are defined in dependent claims 2 to 16.

The present invention relates also to a surface, in particular a sport court, comprising at least one pressure sensitive layer according to any one of the claims 1 to 16.

### BRIEF DESCRIPTION OF THE DRAWINGS

Other features and advantages of the present invention will appear more clearly from the detailed description of one embodiment of the invention which is illustrated by the attached drawings in which:
Figure 1 is a perspective view of a pressure sensitive layer according to the present invention, in which a portion of the mat has been withdrawn;
Figure 2 is a cross-sectional view of a thread used in the pressure sensitive layer shown in Figure 1;
Figure 3 is a perspective view of a surface incorporating a pressure sensitive layer according to the present invention.

### DETAILED DESCRIPTION OF EMBODIMENTS OF THE INVENTION

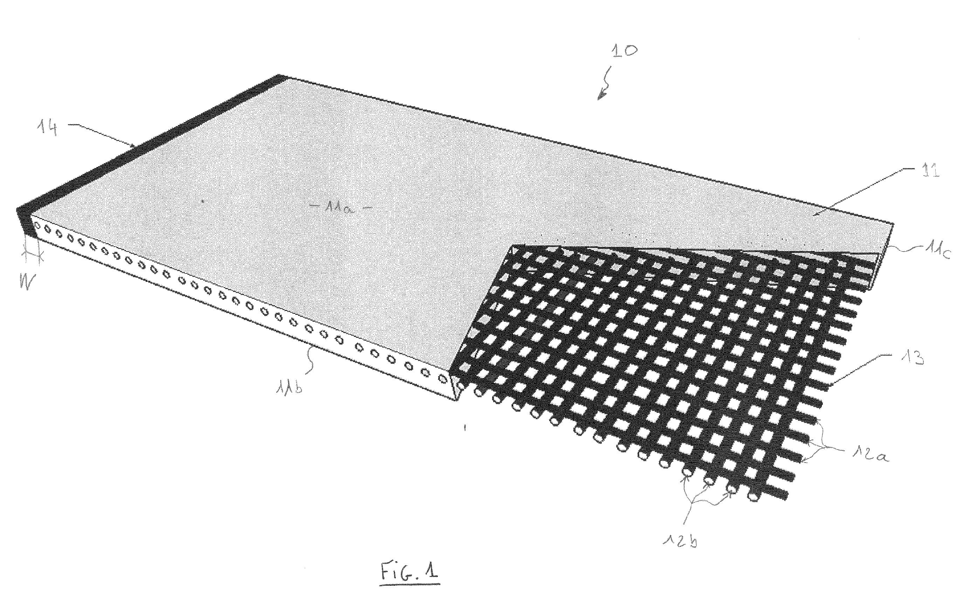

Figure 1 illustrates an exemplary embodiment of a pressure sensitive layer of the present invention.

This pressure sensitive layer 10 has a laminate construction comprising a mat 11 inside which is embedded a first array and a second array of electrically conductive threads 12a, 12b. The threads 12a, 12b are arranged in rows and columns which are mutually perpendicular and spaced apart at adaptable equal intervals, thus forming a rectangular grid 13. The distance between two adjacent threads of the first or second array may advantageously be lower in specific target areas of the grid so as to improve the accuracy in said target areas. In a preferred embodiment of the present invention, the diameter of the threads of the first and second arrays is less than 2 mm, and preferably is between 1 mm and 2 mm, and the distance between two adjacent threads of the first or second array is less than 20 mm, and preferably is between 1 mm and 10 mm. In a further embodiment (not shown) of the present invention, the first direction defined by the first array of electrically conductive threads 12a and the second direction defined by the second array of electrically conductive threads 12b may be inclined to one other at an angle different from ninety degrees. In the grid 13, the threads 12a of the first array and the threads 12b of the second array are disposed one on top the other such that each thread 12a is in contact with at least one thread 12b and each thread 12b is in contact with at least one thread 12a. Preferably, if the grid 13 comprises a number i of rows and a number j of columns, each thread 12a may advantageously be in contact with a number j of threads 12b and each thread 12b may advantageously be in contact with a number i of threads 12a.

The mat 11 is made in an elastic or flexible material, preferably a polymer material like PVC, rubber, acrylic resin or polyurethane, such that it can flex when a pressure is exerted thereon and then return to its normal state shortly afterwards. During this compression, the thickness of the mat, which is preferably less than 10 mm, and, more preferably, between 4 mm and 6 mm, is temporally and locally reduced, which leads to a corresponding compression of one or more pairs of threads 12a and 12b positioned in the compressed area of the mat. As explained in greater detail in the following paragraphs, the compression of two threads 12a and 12b disposed one on top the other leads to a modification of the electrical conductance between said two threads, which can be measured and analyzed by a processing device so as to produce an area map of the various pressures applied simultaneously to the mat. This area map can thereafter be displayed on a monitor and/or processed so as to detect if the pressures are made by a ball or by a human's foot for example. The mat 11 may advantageously be dimensioned so as to cover any surface of any shape or only a part of a sport court. Thus, to detect the pressures applied on any point of the sport court, several mats 11 must be disposed under the surface of said sport court so as to cover the entire surface of said sport court. Considering that the sport courts have generally rectangular shapes, one preferred solution consists to choose rectangular mats 11 having a length and a width corresponding substantially to a unit fraction of the length and the width of the sport court. Therefore, by disposing side by side such dimensioned mats, it is easier to cover the entire surface of a sport court. In particular, the length and the width of the mat 11 may advantageously be equal to, respectively, 7 m and 1,5 m when it is intended to cover a tennis court. The surface covered by the pressure sensitive layer of the present invention may be disposed vertically, horizontally or may be curved. Furthermore, several mats may be stacked on top of each other.

As shown in Figure 1, the pressure sensitive layer 10 may advantageously comprise at least one casing 14 adapted to partially house the threads 12a, 12b of the first and/or second array having portions that are not embedded in the mat 11. Said non-embedded portions of the threads 12a, 12b extend along one or several lateral faces 11 c of the mat 11, between the top face 11 a and the bottom face 11 b thereof. These non-embedded portions are generally used to electrically connect the threads 12a, 12b to a controller, thus permitting an accurate measurement of the electrical conductance throughout the grid 13. However, such a casing 14 defines a non-sensing area of the pressure sensitive layer 10 due to the fact that it does not flex when a pressure is applied thereon. Therefore, to avoid this problem, the casing 14 may advantageously be shaped as a parallelepiped having a very small width W along the direction that is perpendicular to the lateral face 11c along which extends the casing, said width W being preferably less than the spacing between two adjacent threads of the first or second array of the grid 13. Thus configured, an impact occurring in the area of the sport court positioned just above the casing can be detected if the casing is positioned between two mats so as to be tightly surrounded by two adjacent threads of the mats.

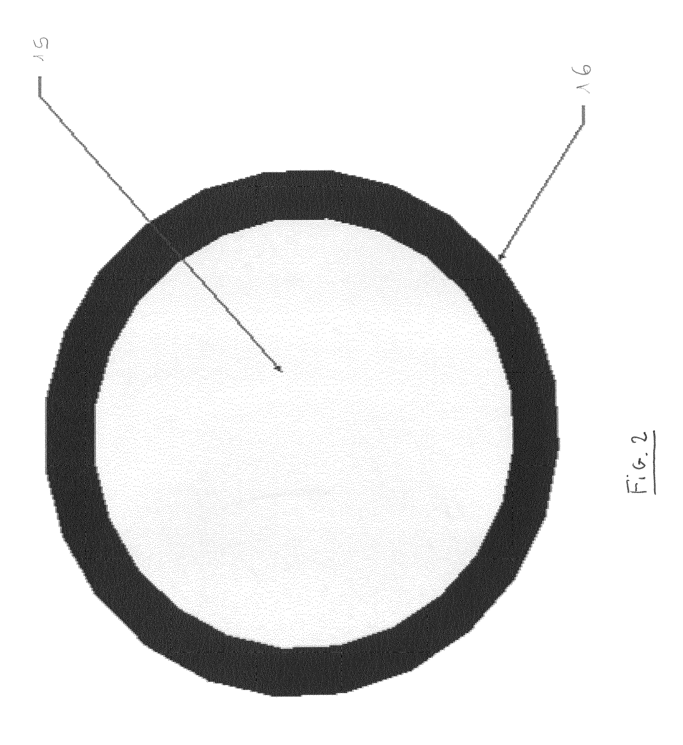

The threads 12a, 12b of the pressure sensitive layer 10 have the same construction. As shown in Figure 2, each thread includes an electrically conductive core 15 that is clad with an outer piezoresistive layer 16. The electrically conductive core 15 is preferably made of material having relatively high electrical conductivity, such as copper. The material of the outer piezoresistive layer 16 is selected to provide a piezoresistive characteristic. Preferably, the piezoresistive outer layer 16 is formed by mixing conductive particles into a polymer material. The conductive particles may advantageously be carbon black particles and the polymer material may advantageously be EVA or PE. In a further embodiment (not shown) of the present invention, the piezoresistive outer layer 16 is made of a polarized PVDF. Thus configured, the piezoresistive outer layer 16 has a variable resistivity depending on the pressure applied thereon. Therefore, by measuring the electrical conductance between two adjacent threads 12a, 12b of the grid 12, it is possible to know the resistivity value of the threads 12a, 12b, which is a function of the pressure exerted on said threads. A two dimensional matrix of digital numbers representing the pressures exerted on each row and column of the grid 13 can thus be established. This matrix can be analyzed thereafter by a processing device so as to determine the shape and the position of the impacted areas on the mat 11 and, thus, the type of impact that occurs on said mat. For example, if the impacted areas are substantially circular, the processing device may probably conclude to a ball impact on the mat.

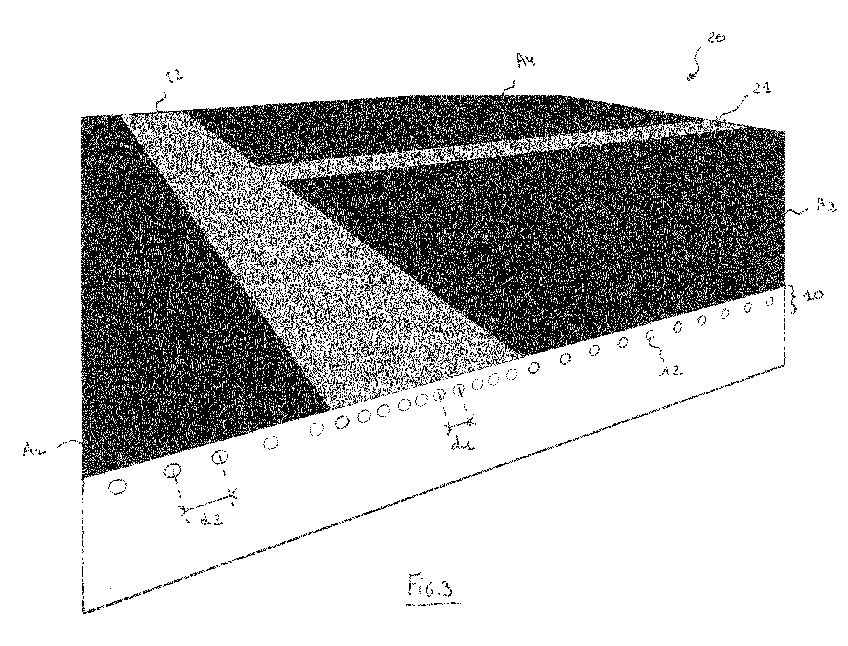

Figure 3 illustrates an exemplary embodiment of a surface comprising a pressure sensitive layer according to the present invention.

This surface 20 is a portion of a tennis court including service lines 21 and 22. The services lines 21, 22 correspond to a target area A1 of the pressure sensitive layer 10, for which the accuracy must be improved. Accordingly, the distance d1 between two adjacent threads 12 of the pressure sensitive layer 10 is chosen so as to be lower in this specific area A1 than the distance d2 between two adjacent threads 12 of the pressure sensitive layer 10 in the other areas A2, A3 and A4 thereof.

## Claims

1. Pressure sensitive layer (10) applicable to any surface comprising:
- a mat (11) defined by a top face (11 a) and a bottom face (11 b), said mat (11) being made in an elastic material such that its thickness can be reduced temporally and locally when a pressure is exerted on its top face (11 a),
- a first array of electrically conductive threads (12a) at least partially embedded in the mat (11),
- a second array of electrically conductive threads (12b) at least partially embedded in the mat (11),
wherein the threads (12a, 12b) of the first and second arrays define a grid (13) in which each thread (12a) of the first array is in contact with at least one thread (12b) of the second array and each thread (12b) of the second array is in contact with at least one thread (12a) of the first array, and
wherein each thread (12a, 12b) of the first and second arrays comprises an electrically conductive core (15) that is clad with an outer piezoresistive layer (16).

2. The pressure sensitive layer (10) according to claim 1, wherein the embedded portions of the threads (12a) of the first array are parallel to a first direction and the embedded portions of the threads (12b) of the second array are parallel to a second direction.

3. The pressure sensitive layer (10) according to claim 2, wherein said second direction is perpendicular to said first direction.

4. The pressure sensitive layer (10) according to any one of the preceding claims, wherein the mat (11) is made of a polymer material.

5. The pressure sensitive layer (10) according to the preceding claim, wherein the polymer material is chosen among PVC, rubber, acrylic resin and polyurethane.

6. The pressure sensitive layer (10) according to any one of the preceding claims, wherein the electrically conductive core (15) of the threads is made of metal, for instance copper.

7. The pressure sensitive layer (10) according to any one of the preceding claims, wherein the outer piezoresistive layer (16) of the threads is made of a mix of a polymer material and conductive particles.

8. The pressure sensitive layer (10) according to claim 7, wherein said polymer material is chosen among EVA and PE.

9. The pressure sensitive layer (10) according to claim 7 or 8, wherein said conductive particles are carbon black particles.

10. The pressure sensitive layer (10) according to any one of claims 1 to 6, wherein the outer piezoresistive layer (16) of the thread is made of a polarized PVDF.

11. The pressure sensitive layer (10) according to any one of the preceding claims, wherein the diameter of the threads (12a, 12b) of the first and second arrays is less than 2 mm, and preferably is between 1 mm and 2 mm.

12. The pressure sensitive layer (10) according to any one of the preceding claims, wherein the distance between two adjacent threads (12a, 12b) of the first or second array is less than 20 mm, and preferably is between 1 mm and 10 mm.

13. The pressure sensitive layer (10) according to any one of the preceding claims, wherein each thread (12a, 12b) of the first and/or second array has a portion that is not embedded in the mat (11), said non-embedded portion extending along a lateral face (11 c) of the mat (11).

14. The pressure sensitive layer (10) according to the preceding claim, wherein said non-embedded portion is housed in a parallelepiped casing (14).

15. The pressure sensitive layer (10) according to the preceding claim, wherein said casing (14) extends along a direction that is perpendicular to said lateral face (11 c), the width (W) of the casing (14) along said direction being less than the spacing between two adjacent threads (12a, 12b) of the first or second array.

16. The pressure sensitive layer (10) according to any one of the preceding claims, wherein the grid (13) comprises at least one first area (A1) and at least one second area (A2, A3, A4), the distance (d1) between two adjacent threads of the first area (A1) being lower than the distance (d2) between two adjacent threads of the second area (A2, A3, A4).

17. Surface (20), in particular a sport court, comprising at least one pressure sensitive layer (10) according to any one of the preceding claims.
